# EUROPÄISCHE PATENTSCHRIFT

(11) **EP 3 455 304 B1**
(45) Veröffentlichungstag und Bekanntmachung des Hinweises auf die Patenterteilung: **01.04.2020**
(21) Anmeldenummer: 17719213.5
(22) Anmeldetag: 18.04.2017
(51) Int. Cl.: C09D 7/00

(54) **STABILISATOREN FÜR SILIKATFARBEN**
STABILZERS FOR SILICATE PAINTS
STABILISATEURS POUR PEINTURES AUX SILICATES

(30) Priorität: 09.05.2016 DE 102016207877
(43) Veröffentlichungstag der Anmeldung: 20.03.2019
(73) Patentinhaber: Clariant International Ltd, 4132 Muttenz (CH)
(72) Erfinder: KUPFER, Rainer, 65795 Hattersheim (DE); PITARCH LOPEZ, Jesus, 60431 Frankfurt am Main (DE); SÖFFING, Christoph, 40822 Mettmann (DE); RÜGER, Jörg, 63773 Goldbach (DE)
(74) Vertreter: Mikulecky, Klaus
(86) Internationale Anmeldenummer: PCT/EP2017/059115
(87) Internationale Veröffentlichungsnummer: WO 2017/194270

(56) Entgegenhaltungen:
- DE-A1-102014 017 368
- KR-B1- 100 862 502
- US-A1- 2005 084 466

## Beschreibung

Gegenstand der vorliegenden Erfindung sind Stabilisatoren für Silikat- und Dispersionssilikat-Farben, die die Thixotropie und Viskosität der Farben reduzieren.

Silikat- und Dispersionssilikat-Farben, die gemäß DIN 18363 bis zu 5 Gew.-% organischen Anteil enthalten dürfen, wie auch Organo-Silikat-Farben mit > 5 Gew.-% organischem Anteil erfreuen sich zunehmenden Interesses, da sie auf Grund ihres hohen pH-Werts keine bzw. wenig Biozide benötigen. Nach dem Stand der Technik werden in wässrigen Silikat- und Dispersionssilikat-Farben Stabilisatoren eingesetzt, die das frühzeitige Verkieseln des Wasserglases im Gebinde verhindern, so dass die Beschichtung während der Lagerung nicht vergelt und applizierbar bleibt.

WO 9418277 beschreibt pyrogene Kieselsäure, dessen Oberfläche mit Tensiden modifiziert ist und als Rheologie-Additive und Verdicker eingesetzt werden kann. Insbesondere eignen sich dazu tertiäre und quaternäre Alkylamine einschließlich deren Alkoxylaten und Dimeren als Tenside.

WO 0073237 und EP 1222234 beschreiben beide eine silikatische Beschichtung, die quartäres bis-Hydroxy-Ammonium-Salz als Stabilisator verwendet.

EP 1431354 lehrt tertiäre Diamine als Stabilisatoren für Wasserglassysteme.

DE 102006045853 lehrt Zusammensetzungen von silikathaltigen Formulierungen bestehend aus stickstoffhaltigen Verbindungen und Alkylsilikonaten, die eine verbesserte Viskositätsstabilisierung aufweisen.

S. Weber (Farbe und Lacke, 2007, Vol. 5, S.173-174) lehrt, dass technisch bewährte Stabilisatoren für Silikat- und Organosilikat-Farben auf quartären Ammoniumverbindungen und Aminderivaten basieren. Insbesondere stellt S. Weber heraus, dass eine Kombination zweier Stabilisatoren zu einer reduzierten Verdickung während der Lagerung führt.

EP 0614881, US 5449770 und US 2016962 beschreiben Methoden zur Herstellung von Glukaminen ausgehend von Glukose.

EP 1676831 beschreibt allgemein die Herstellung von tertiären Dialkylglukaminen wie Diethylglukamin und deren Verwendung als Tensid in wässrigen Anstrichen, ohne jedoch ein konkretes Beispiel anzuführen.

KR-100862502 lehrt eine Silberspiegelflüssigkeit und das Verfahren zur Herstellung einer Silberspiegelbeschichtung unter Verwendung eines Online-Systems, um für eine kontinuierliche Online-Produktionslinie geeignet zu sein. Das Verfahren umfasst die Anwendung einer Nachbearbeitungsflüssigkeit, bestehend aus mindestens einem Quencher für eine Silberspiegelbeschichtung, ein Tensid von und destilliertes Wasser.

US-2005/0084466 lehrt eine amphiphile Verbindung, umfassend:
(a) eine lipophile Komponente, wobei die lipophile Komponente eine Kohlenwasserstoffgruppe mit 20 oder mehr Kohlenstoffatomen ist;
(b) eine hydrophile Komponente, wobei die hydrophile Komponente ausgewählt ist aus
   (i) einem Monomer oder einem Oligomer einer Oxyalkylengruppe mit 2 oder mehr Kohlenstoffatomen oder Derivaten davon;
   (ii) ein Monomer oder ein Oligomer einer Oxyalkylengruppe mit 3 oder mehr Kohlenstoffatomen oder Derivate davon;
   (iii) ein Oligomer, umfassend:
      (1) eine Oxyalkylengruppe mit 3 oder mehr Kohlenstoffatomen oder Derivaten davon; und
      (2) eine Oxyalkylengruppe mit 2 oder mehr Kohlenstoffatomen oder Derivate davon, vorausgesetzt, dass sich Komponente (2) von Komponente (1) unterscheidet;
   (iv) eine Hydroxyaminogruppe oder Derivate, davon;
   (v) einen mehrwertigen Alkohol oder Derivate davon; und
   (vi) ein Polyamin oder Derivate davon; und
(c) einen Linker, der die hydrophile Komponente kovalent an die lipophile Komponente bindet,
wobei die hydrophile Komponente ist in einer Menge vorhanden ist, die ausreicht, um die amphiphile Verbindung mindestens teilweise in Wasser zu dispergieren.

DE-A-102014017368 lehrt eine Dispersionsfarbe mindestens enthaltend
(A) mindestens eine Verbindung der Formel (I) 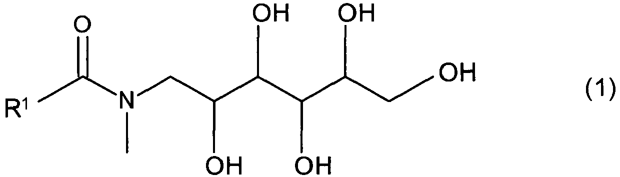 worin R¹ für eine Kohlenwasserstoffgruppe mit 7 bis 21 Kohlenstoffatomen steht,
(B) einen polymeren Binder
(C) mindestens ein Pigment, ein Füllstoff oder beides, und
(D) Wasser.

Die nach dem Stand der Technik beschriebenen silikatischen Beschichtungen weisen in der Praxis eine hohe Thixotropie auf, die die Handhabung für den Verbraucher erschwert, da die Beschichtung wie Pudding erscheint. Daher müssen Silikat- und Dispersionssilikat-Farben vor der Verwendung stark aufgerührt werden, um die Thixotropie zu zerstören und diese fließfähig zu bekommen, um die Farbe gleichmäßig auftragen zu können und einen besseren Verlauf zu generieren. Darüber hinaus zeigen silikatische Beschichtungen üblicherweise eine starke Neigung während der Lagerung zu verdicken, welche an Hand der Lösungen nach dem Stand der Technik nur teilweise gelöst wurde.

Aufgabe der vorliegenden Erfindung war daher, Stabilisatoren für Silikat- und Dispersionssilikat-Farben aufzufinden, die die Viskosität und Thixotropie reduzieren, um den Umgang und die Applizierbarkeit von Silikat- und Dispersionssilikat-Farben zu verbessern, sowie deren Lagerstabilität zu verbessern.

Überraschenderweise wurde gefunden, dass dies mit Aminen auf Basis des nachwachsenden Rohstoffes Glukose möglich ist.

Gegenstand der Erfindung ist daher eine silikatische Beschichtung enthaltend
(A) mindestens einer Verbindung der Formel (I) 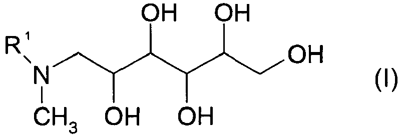 worin R¹ für C₁-C₄-Alkyl, CH₂CH₂OH oder CH₂CH(CH₃)OH steht,
(B) mindestens einem Silikatbindemittel,
(C) gegebenenfalls einem oder mehreren polymeren Bindemittel,
(D) gegebenenfalls weitere zur Herstellung silikatischer Beschichtungen übliche Zusatzstoffe und
   und
(E) Wasser.

Verbindung (I) ist ein Polyhydroxy-Amin wobei R¹ C₁-C₄-Alkyl, CH₂CH₂OH oder CH₂CH(CH₃)OH sein kann. Vorzugsweise ist R¹ Methyl oder CH₂CH₂OH, insbesondere Methyl oder CH₂CH₂OH, speziell Methyl.

Die Polyhydroxy-Einheit ist eine Hexose, vorzugsweise das Epimer Glukose.

Das Verfahren zur Herstellung der Alkylglukamine der Formel (I) ist dem Fachmann hinlänglich bekannt. Sie erfolgt für Verbindungen mit R = C₁- bis C₄-Alkyl beispielsweise gemäß der in EP 1676831 angegebenen Methode durch reduktive Alkylierung von N-Alkylpolyhydroxylaminen mit Aldehyden oder Ketonen in Gegenwart von Wasserstoff und eines Übergangsmetallkatalysators. Hydroxyethyl- und Hydroxypropyl-N-Methyl-glukamin kann durch Reaktion von N-Methylglukamin mit Ethylenoxid bzw. Propylenoxid in wässriger Lösung hergestellt werden. Die Verbindungen der Formel (I) können als Reinsubstanzen oder als wässrige Lösungen eingesetzt werden. Da die tertiären Amine, wie Dimethylglukamin, Hydroxyethyl- und Hydroxypropyl-N-Methyl-glukamin wenig anfällig für die Bildung von Nitrosaminen sind, werden diese für die erfindungsgemäßen silikatischen Beschichtungen eingesetzt.

Das Silikatbindemittel, Komponente (B), sind vorzugsweise gefällte Alkalislikate, Wasserglase oder Kieselsole.

Polymere Bindemittel, Komponente (C), sind vorzugsweise Homo- oder Copolymere olefinisch ungesättigter Monomere. Bevorzugte olefinisch ungesättigte Monomere sind beispielsweise
- Vinylmonomere, wie Carbonsäureester des Vinylalkohols, beispielsweise Vinylacetat, Vinylpropionat, Vinylether der Isononansäure oder der Isodecansäure, die auch als C₉ und C₁₀-Versaticsäuren bezeichnet werden,
- Arylsubstituierte Olefine, wie Styrol und Stilben,
- olefinisch ungesättigte Carbonsäureester, wie Methylacrylat, Ethylacrylat, Propylacrylat, n-Butylacrylat, i-Butylacrylat, Pentylacrylat, Hexylacrylat, 2-Ethylhexylacrylat, Tridecyacrylat, Stearylacrylat, Hydroxyethylacrylat, Hydroxypropylacrylat sowie die entsprechenden Methacrylsäureester,
- olefinisch ungesättigte Dicarbonsäureester, wie Dimethylmaleinat, Diethylmaleinat, Dipropylmaleinat, Dibutylmaleinat, Dipentylmaleinat, Dihexylmaleinat und Di-2-ethylhexylmaleinat,
- olefinisch ungesättigte Carbonsäuren und Dicarbonsäuren, wie Acrylsäure, Methacrylsäure, Itaconsäure, Maleinsäure und Fumarsäure und ihre Natrium-, Kalium- und Ammoniumsalze,
- olefinisch ungesättigte Sulfonsäuren und Phosphonsäuren und ihre Alkali- und Ammoniumsalze, wie Vinylsulfonsäure, Vinylphosphonsäure, Acrylamidomethylpropansulfonsäure und ihre Alkali- und Ammonium-, Alkylammonium- und Hydroxyalkylammoniumsalze, Allylsulfonsäure und ihre Alkali- und Ammoniumsalze, Acryloyloxethylphosphonsäure und ihre Ammonium- und Alkalisalze sowie die entsprechenden Methacrylsäurederivate,
- olefinisch ungesättigte Amine, Ammoniumsalze, Nitrile und Amide, wie Dimethylaminoethylacrylat, Acryloyloxethyltrimethylammoniumhalide, Acrylnitril, Acrylamid, Methacrylamid, N-Methylacrylamid, N-Ethylacrylamid, N-Propylacrylamid, N-Methylolacrylamid sowie die entsprechenden Methacrylsäurederivate und Vinylmethylacetamid.

Übliche Zusatzstoffe, Komponente (D), können sein: Pigmente, wobei mit dem Begriff "Pigmente" sowohl Pigmente, als auch Füllstoffe im weiteren Sinne gemeint sind, und Hilfsstoffe. Hilfsstoffe können unter anderem Netz- und Dispergiermittel, Entschäumer, Biozide, Koaleszensmittel, Alkali sowie Rheologie-Additive sein.

Geeignete Pigmente sind feinteilige, organische oder anorganische Weiß- oder Buntpigmente oder ein Gemisch verschiedener solcher Pigmente.

Als beispielhafte Auswahl besonders bevorzugter organischer Pigmente sind dabei Rußpigmente, wie z. B. Gas- oder Furnaceruße; Monoazo- und Disazopigmente, insbesondere die Color Index Pigmente Pigment Yellow 1, Pigment Yellow 3, Pigment Yellow 12, Pigment Yellow 13, Pigment Yellow 14, Pigment Yellow 16, Pigment Yellow17, Pigment Yellow 73, Pigment Yellow 74, Pigment Yellow 81, Pigment Yellow 83, Pigment Yellow 87, Pigment Yellow 97, Pigment Yellow 111, Pigment Yellow 126, Pigment Yellow 127, Pigment Yellow 128, Pigment Yellow 155, Pigment Yellow 174, Pigment Yellow 176, Pigment Yellow 191, Pigment Yellow 213, Pigment Yellow 214, Pigment Red 38, Pigment Red 144, Pigment Red 214, Pigment Red 242, Pigment Red 262, Pigment Red 266, Pigment Red 269, Pigment Red 274, Pigment Orange 13, Pigment Orange 34 oder Pigment Brown 41; β-Naphthol- und Naphthol AS Pigmente, insbesondere die Colour Index Pigmente Pigment Red 2, Pigment Red 3, Pigment Red 4, Pigment Red 5, Pigment Red 9, Pigment Red 12, Pigment Red 14, Pigment Red 53:1, Pigment Red 112, Pigment Red 146, Pigment Red 147, Pigment Red 170, Pigment Red 184, Pigment Red 187, Pigment Red 188, Pigment Red 210, Pigment Red 247, Pigment Red 253, Pigment Red 254, Pigment Red 256, Pigment Orange 5, Pigment Orange 38 oder Pigment Brown 1; verlackte Azo- und Metallkomplexpigmente, insbesondere die Colour Index Pigmente Pigment Red 48:2, Pigment Red 48:3, Pigment Red 48:4, Pigment Red 57:1, Pigment Red257, Pigment Orange 68 oder Pigment Orange 70; Benzimidazolinpigmente, insbesondere die Colour Index Pigmente Pigment Yellow 120, Pigment Yellow 151, Pigment Yellow 154, Pigment Yellow 175, Pigment Yellow 180, Pigment Yellow 181, Pigment Yellow 194, Pigment Red 175, Pigment Red 176, Pigment Red 185, Pigment Red 208, Pigment Violet 32, Pigment Orange 36, Pigment Orange 62, Pigment Orange 72 oder Pigment Brown 25; Isoindolinon- und Isoindolinpigmente, insbesondere die Colour Index Pigmente Pigment Yellow 139 oder Pigment Yellow 173; Phthalocyaninpigmente, insbesondere die Colour Index Pigmente Pigment Blue 15, Pigment Blue 15:1, Pigment Blue 15:2, Pigment Blue 15:3, Pigment Blue 15:4, Pigment Blue 15:6, Pigment Blue 16, Pigment Green 7 oder Pigment Green 36; Anthanthron-, Anthrachinon-, Chinacridon-, Dioxazin-, Indanthron-, Perylen-, Perinon- und Thioindigopigmente, insbesondere die Colour Index Pigmente Pigment Yellow 196, Pigment Red 122, Pigment Red 149, Pigment Red 168, Pigment Red 177, Pigment Red 179, Pigment Red 181, Pigment Red 207, Pigment Red 209, Pigment Red 263, Pigment Blue 60, Pigment Violet 19, Pigment Violet 23 oder Pigment Orange 43; Triarylcarboniumpigmente, insbesondere die Colour Index Pigmente Pigment Red 169, Pigment Blue 56 oder Pigment Blue 61 zu nennen.

Geeignete anorganische Pigmente sind beispielsweise Titandioxide, Zinksulfide, Zinkoxide, Eisenoxide, Magnetite, Manganeisenoxide, Chromoxide, Ultramarin, Nickel- oder Chromantimontitanoxide, Mangantitanrutile, Cobaltoxide, Mischoxide des Cobalts und Aluminiums, Rutilmischphasenpigmente, Sulfide der seltenen Erden, Spinelle des Cobalts mit Nickel und Zink, Spinelle basierend auf Eisen und Chrom mit Kupfer Zink sowie Mangan, Bismutvanadate sowie Verschnittpigmente, insbesondere werden die Color Index Pigmente Pigment Yellow 184, Pigment Yellow 53, Pigment Yellow 42, Pigment Yellow Brown 24, Pigment Red 101, Pigment Blue 28, Pigment Blue 36, Pigment Green 50, Pigment Green 17, Pigment Black 11, Pigment Black 33 sowie Pigment White 6 verwendet; auch als Füllstoffe bezeichnete Calciumcarbonate wie natürlich vorkommende Kreide und gefälltes Calciumcarbonat, Dolomit, natürliches Siliciumdioxid (Quarzmehl), pyrogene und gefällte Kieselsäuren, Kieselgur, Aluminiumoxide, Aluminiumhydroxide, Talkum, Kaolin, Glimmer (Kalium-Aluminium-Silikat-Hydrat), Bariumsulfate wie natürlich vorkommendes Schwerspate und gefälltes Blanc Fix. Bevorzugt werden auch häufig Mischungen anorganischer Pigmente verwendet. Mischungen von organischen mit anorganischen Pigmenten werden ebenfalls häufig verwendet.

Geeignete Netz- und Dispergiermittel sind vorzugsweise Polyacrylatsalze, Acrylat- und MAS-Copolymere, Alkylphenolethoxylate und Alkylphenolethoxylat-Ersatzstoffe, wie Guerbet-Derivate, Fettsäuer- und Fettalkoholderivate, insbesondere deren Alkoxylate, sowie EO/PO-Homo- und Blockcopolymere und Polysiloxanether.

Geeignete Entschäumer sind vorzugsweise Mineralölentschäumer und deren Emulsionen, Siliconölentschäumer und Siliconölemulsionen, Polyalkylenglykole, Polyalkylenglykolfettsäureester, Fettsäuren, höherwertige Alkohole, Phosphorsäureester, hydrophob modifizierte Silika, Aluminiumtristearat, Polyethylenwachse und Amidwachse.

Geeignete Biozide zur Verhinderung der unkontrollierten Vermehrung von Bakterien, Algen und Pilzen sind Formaldehyd, Formaldehyd abspaltende Verbindungen, Methylisothiazolinon, Chlormethylisothiazolinon, Benzisothiazolinon, Bronopol, Dibromodicyanonbutan und silberchloridbeschichtetes Titandioxid.

Geeignete Koaleszensmittel sind Ester und Ketone wie Benzoate und Butyrate, sowie Etheralkohole und Glykole. Insbesondere 2,2,4-Trimethyl-pentan-1,3-diol-mono-iso-butyrat, Butylglykol, Butyldiglykol, Butyldipropylenglykol, Propylenglykolbutylether und Dipropylenglykolbutylether sind als Koaleszensmittel zu nennen.

Geeignete Alkalien sind Metallhydroxyde ein-, zwei- oder dreiwertiger Metallionen. Bevorzugte Alkalien sind Natronlauge oder Kalilauge sowie deren wässrige Lösungen.

Geeignete Rheologieadditive als Mittel zur Regulierung der Viskosität sind z. B. Stärke- und Cellulosederivate und hydrophobmodifizierte ethoxylierte Urethane (HEUR)-Verdicker, alkaliquellbare Acrylatverdicker, hydrophob modifizierte Acrylatverdicker, Xanthane, Schichtsilikate, Polymere der Acrylamidomethylpropansulfonsäure oder pyrogene Kieselsäure.

Eine Übersicht über gängige Hilfsstoffe geben Wernfried Heilen et al. in "Additive für wässrige Lacksysteme", erschienen bei Vincentz Network, 2009.

Zur Herstellung der erfindungsgemäßen silikatische Beschichtung benutztes Wasser, Komponente (E), wird vorzugsweise in Form von destilliertem oder entsalztem Wasser eingesetzt. Auch Trinkwasser (Leitungswasser) und/oder Wasser natürlichen Ursprungs kann eingesetzt werden.

In einer bevorzugten Ausführungsform der Erfindung ist die Komponente (A) in einer Menge von 0,01 bis 10 Gew-%, insbesondere 0,02 bis 5,0 Gew-% in der erfindungsgemäßen Zusammensetzung enthalten.

In einer bevorzugten Ausführungsform der Erfindung ist die Komponente (B) in einer Menge von 0,1 bis 40 Gew-%, insbesondere 0,5 bis 25 Gew-% in der erfindungsgemäßen Zusammensetzung enthalten.

In einer bevorzugten Ausführungsform der Erfindung ist die Komponente (C) in einer Menge von 0,1 bis 70 Gew-%, insbesondere 0,5 bis 50 Gew-% in der erfindungsgemäßen Zusammensetzung enthalten.

Enthält die erfindungsgemäße Zusammensetzung ein oder mehrere Bestandteile, die unter Komponente (D) zu subsumieren sind, so gelten folgende bevorzugte Mengen solcher Bestandteile:
- Weiß- oder Buntpigment in einer Menge von 10 bis 70 Gew.-%
- Netz- oder Dispergiermittel in einer Menge von 0,01 bis 10 Gew.-%
- Entschäumer in einer Menge von 0,01 bis 5 Gew.-%
- Biozide in einer Menge von 0,01 bis 5 Gew.-%
- Koaleszenzmittel in einer Menge von 0,01 bis 5 Gew.-%.
- Rheologie-Additive in einer Menge von 0,1 bis 10 Gew.-%.
- Alkalien in einer Menge von 0,01 bis 10 Gew.-%.

In einer bevorzugten Ausführungsform der Erfindung ist die Komponente (E) in einer Menge von 1 bis 80 Gew.-%, insbesondere ad 100 Gew-% in der erfindungsgemäßen Zusammensetzung enthalten.

Angaben in Gewichtsprozenten beziehen sich auf das Gesamtgewicht der Beschichtungszusammensetzung.

In einer weiteren bevorzugten Form wird Komponente (A), Verbindung der Formel (I) mit einer quartären Ammonium-Verbindung kombiniert. In einer bevorzugten Form handelt es sich bei der quartären Ammonium-Verbindung um eine Verbindung der Formel (II a) oder (II b), 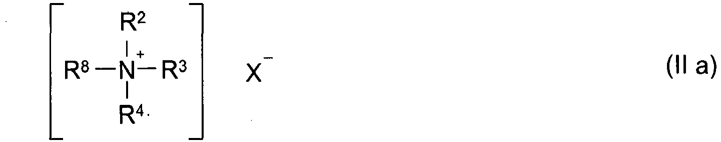 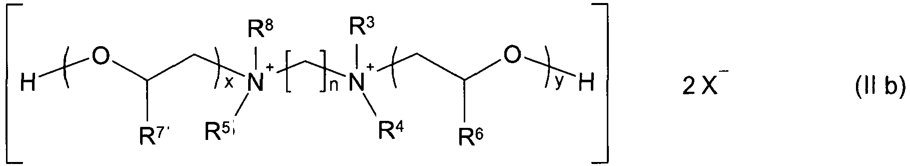 worin
- R³, R⁴, R⁵ und R⁸: unabhängig voneinander für C₁-C₆-Alkyl;
- R²: für C₁-C₂-Alkyl, CH₂CH₂OH oder CH₂CH(CH₃)OH;
- R⁶ und R⁷: für H oder C₁-C₄-Alkyl; und
- n, x und y: unabhängig voneinander für eine Zahl zwischen 1 und 10 stehen.
- X: ist ein Anion ausgewählt aus der Gruppe den Halogenide, Nitritde, Nitrate, Carbonate, Phosphate, Phosphonate, Hydroxyde, Sulfate oder Sulfonate.

In einer besonders bevorzugten Form werden die Verbindungen der Formeln (I) und (II) im Verhältnis 0,5:1 bis 1:0,5 eingesetzt. In einer besonders bevorzugten Form liegt das Verhältnis der Verbindungen der Formeln (I) und (II) zwischen 0,75:1 bis 1:0,75.

Die erfindungsmäßigen silikatische Beschichtungen eignen sich zur Herstellung von Beschichtungen aller Arten. Besonders eignen sich die erfindungsmäßigen silikatische Beschichtungen zur Herstellung von Silikat-, Dispersionssilikat- und Organo-Silikat-Farben und Putze für innen und außen, sowie Form-, Kleb- und Spachtelmassen.

Ein weiterer Gegenstand der Erfindung ist die Verwendung der Verbindung der Formel (I) als Stabilisator für Silikat-, Dispersionssilikat- und Organo-Silikat-Farben und Putze für innen und außen, sowie Form-, Kleb- und Spachtelmassen.

### Beispiele

Prozentangaben in dieser Beschreibung sind Gewichtsprozente bezogen auf das Gewicht der Gesamtzusammensetzung, sofern nichts anderes angegeben ist.

In einer Vergleichsreihe wurden die stickstoffhaltigen Verbindungen der Tabelle 1 in silikatischen Beschichtungen hinsichtlich Ihrer Auswirkungen auf die Rheologie und untersucht. Die Viskosität und Vsikositätsänderung über die Lagerzeit zeigen das Maß der Verdickung. Die Fließgrenze und die Thixotropie-Fläche zeigen die Kraft, die benötigt wird, um die silikatische Beschichtung fließfähig zu bekommen, um die Farbe gleichmäßig auftragen zu können. Die Änderung über die Lagerzeit zeigt, wie schnell sich die Thixotropie wieder aufbaut und so den gleichmäßigen Verlauf verhindert.

Die rheologischen Messungen wurden am Rheometer HAAKE MARS III (Thermo Scientific) durchgeführt. Eine Lösemittelfalle gefüllt mit Wasser und Probenraumabdeckung wurden bei jeder Messung verwendet.

Die Viskosität wurde mit einer Kegel-Platte Messgeometrie (1° 60 mm) bei 20 °C gemessen. Eine Rotationsrampe mit Scherratenvorgabe zwischen 1 und 200 s⁻¹ wurde gemessen und der Wert der Viskosität bei einer Scherrate von 60 s⁻¹ abgelesen.

Die Ermittlung der Thixotropie erfolgte über die Auswertung der Hysteresefläche zwischen Rotationsaufwärts- und abwärtsrampen mit Scherratenvorgabe zwischen 0,1 und 1000 s⁻¹. Die Messungen wurde mit einer Kegel-Platte Messgeometrie (1° 60 mm) bei 23 °C durchgeführt.

Vor der Fließgrenzenbestimmung wurde die Probe auf die Messplatte aufgetragen, 5 Minuten bei 0,1 s⁻¹ geschert und 5 Minuten ruhen gelassen (Strukturerholungsphase). Anschließend wurde eine Rotationsrampe mit Schubspannungsvorgabe zwischen 0,01 und 80 Pa durchgeführt. Die Ermittlung der Fließgrenze erfolgte nach der Tangentenmethode in einer doppeltlogarithmischer Darstellung der Messkurve. Die Messungen wurden mit einer Platte-Platte Geometrie (35 mm - Spalt 1 mm) bei 23 °C durchgeführt.

**Tabelle 1: Verwendete Stabilisatoren**

| Stabilisator | Beschreibung | Beispielart |
|---|---|---|
| N,N,N',N'-tetrahydroxyalkyl-α-ω-alkylamin | Tertiäre Diamin-Verbindung Betolin® Q 40, Wöllner | Vergleichsbeispiel |
| N-Methylglukamin | Verbindung I mit R¹ = H | Vergleichsbeispiel |
| N,N-Dimethylglukamin | Verbindung I mit R¹ = CH₃ | Beispiel |

**Tabelle 2: Zusammensetzung der Silikat-Farben in Gew.-%**

| Pos. | Rohstoff | Funktion | Gew.-% |
|---|---|---|---|
| 1 | Wasser | Lösemittel | 24,5 |
| 2 | Tylose H 30.000 P2 | Cellulose-Verdicker | 0,4 |
| 3 | Sapetin D27 | Netzmittel | 0,2 |
| 4 | DispersogenSPS | Stabilisator (Quartäre Ammonium-Verbindung) | 1 |
| 5 | Agitan E 256 | Entschäumer | 0,15 |
| 6 | Tiona 595 | Weißpigment | 10 |
| 7 | Finntalc M30SL | Füllstoff | 5 |
| 8 | Omyacarb 2 GU | Füllstoff | 10 |
| 9 | Omyacarb 5 GU | Füllstoff | 16 |
| 10 | Omyacarb extra GU | Füllstoff | 3,7 |
| 11 | Wasser | Lösemittel | 1 |
| 12 | Mowilith LDM 6119 | Bindemittel | 9 |
| 13 | Wasser | Lösemittel | 1 |
| 14 | Silres BS 1306 | Silikon Öl | 0,65 |
| 15 | Betolin K28 | Alkali | 16 |
| 16 | Stabilisator gemäß Tabelle 1 | Stabilisator | 0,2 |
| 17 | Wasser | Lösemittel | 0,2 |
| 18 | Agitan E 256 | Entschäumer | 0,15 |
| 19 | Wasser | Lösemittel | 0,85 |
| | Total | | 100 |

Eine Silikat-Farbe war entsprechend der Tabelle 2 zusammengesetzt. Dazu wurden die Komponenten 1 - 5 bei Raumtemperatur durch sukzessive Zugabe bei 100 bis 300 U/min mit Hilfe eines Dissolvers der Firma Getzmann mit Sägezahnrührer homogenisiert. Anschließend wurden die Komponenten 6-10 bei hoher Scherrate (1000 - 1300 U/min) dispergiert. Abschließend werden die Komponenten 11 bis 19 bei 1300 U/min sukzessive zugegeben und homogenisiert.

Die Eigenschaften der Silikatfarbe gemäß Tabelle 2, wenn Sie mit einem Stabilisator gemäß Tabelle 1 additiviert war, zeigt Tabelle 3.

**Tabelle 3: Beispiele 1 (V) bis 3 in Silikat Farbe**

| Beispiel | 1 (V) | 2 (V) | 3 |
|---|---|---|---|
| Stabilisator | N,N,N',N'-tetrahydroxyalkyl-α-ω-alkylamin | N-Methylglukamin | N,N-Dimethylglukamin |
| Viskosität nach 24 h Lagerung bei Raumtemperatur | 622 mPas | 420 mPas | 401 mPas |
| Viskosität nach 28 Tagen Lagerung bei Raumtemperatur | 2186 mPas | 970 mPas | 873 mPas |
| pH-Wert | 11 | 11 | 11 |
| Fließgrenze nach 24 h Lagerung bei Raumtemperatur | 3,4 Pa | < 1 Pa | 2,6 Pa |
| Fließgrenze nach 28 Tagen Lagerung bei Raumtemperatur | 11 Pa | 2,7 Pa | 8,0 Pa |
| Thixotropy-Fläche nach 7 Tagen Lagerung bei Raumtemperatur | 21,7 kPa/s | 4,4 kPa/s | 4,5 kPa/s |
| Thixotropy-Fläche nach 28 Tagen Lagerung bei Raumtemperatur | 41,9 kPa/s | 15,4 kPa/s | 11,8 kPa/s |

Tabelle 3, Beispiel 1 (V) zeigt eine höhere Viskosität und einen stärkeren Viskositätsanstieg gegenüber der Erfindung (Beispiele 2 & 3). Die geringere Thixotropie-Fläche und Fließgrenze der Beispiele 2 und 3 weist einen leichteren Umgang der Silikatfarben auf.

**Tabelle 4: Zusammensetzung der Organosilikat-Farben in Gew.-%**

| Pos. | Rohstoff | Funktion | Gew.-% |
|---|---|---|---|
| 1 | Wasser | Lösemittel | 20 |
| 2 | Tafigel PUR 40 | PU-Verdicker | 0,3 |
| 3 | Tylose MH 6000 YG8 | Cellulose-Verdicker | 0,08 |
| 4 | Lopon 890 | Netzmittel | 0,3 |
| 5 | Dispersogen SPS | Stabilisator (Quartäre Ammonium-Verbindung) | 0,16 |
| 6 | Agitan E 256 | Entschäumer | 0,4 |
| 7 | Wükonil HB 3000 | Wachs | 2 |
| 8 | Tiona 595 | Weißpigment | 17,5 |
| 9 | Finntalc M30SL | Füllstoff | 5 |
| 10 | Omyacarb 2 GU | Füllstoff | 8,5 |
| 11 | Omyacarb 5 GU | Füllstoff | 6,5 |
| 12 | Omyacarb extra GU | Füllstoff | 12 |
| 13 | Wasser | Lösemittel | 1 |
| 14 | Mowilith LDM 1828 | Bindemittel | 17 |
| 15 | Wasser | Lösemittel | 1 |
| 16 | Tafigel PUR 44 | PU-Verdicker | 0,5 |
| 17 | Kalilauge (10 %-ig) | Alkali | 1 |
| 18 | Betolin K28 | Wasserglas | 3,5 |
| 19 | Stabilisator gemäß Tabelle 1 | Stabilisator | 0,2 |
| 20 | Wasser | Lösemittel | 0,2 |
| 21 | Agitan E 256 | Entschäumer | 0,15 |
| 22 | Wasser | Lösemittel | 1,67 |
| | Total | | 100 |

Eine Organosilikat-Farbe war entsprechend der Tabelle 4 zusammengesetzt. Dazu wurden die Komponenten 1 - 7 bei Raumtemperatur durch sukzessive Zugabe bei 100 bis 300 U/min mit Hilfe eines Dissolvers der Firma Getzmann mit Sägezahnrührer homogenisiert. Anschließend wurden die Komponenten 8-13 bei hoher Scherrate (1000 - 1300 U/min) dispergiert. Abschließend werden die Komponenten 14 bis 22 bei 1300 U/min sukzessive zugegeben und homogenisiert.

Die Eigenschaften der Organosilikatfarbe gemäß Tabelle 4, wenn Sie mit einem Stabilisator gemäß Tabelle 1 additiviert war, zeigt Tabelle 5.

**Tabelle 5: Beispiele 4 (V) bis 6 in Organosilikat-Farbe**

| Beispiel | 4 (V) | 5 (V) | 6 |
|---|---|---|---|
| Stabilisator | N,N,N',N'-tetrahydroxyalkyl-α-ω-alkylamin | N-Methylglukamin | N,N-Dimethylglukamin |
| Viskosität nach 24 h Lagerung bei Raumtemperatur | 1441 mPas | 838 mPas | 832 mPas |
| Viskosität nach 28 Tagen Lagerung bei Raumtemperatur | 2855 mPas | 1567 mPas | 1463 mPas |
| pH-Wert | 11 | 11 | 11 |
| Fließgrenze nach 24 h Lagerung bei Raumtemperatur | 5 Pa | 1 Pa | 4 Pa |
| Fließgrenze nach 28 Tagen Lagerung bei Raumtemperatur | 9 Pa | 5 Pa | 6 Pa |
| Thixotropy-Fläche nach 7 Tagen Lagerung bei Raumtemperatur | 36 kPa/s | 33 kPas/s | 28 kPas/s |
| Thixotropy-Fläche nach 28 Tagen Lagerung bei Raumtemperatur | 57 kPa/s | 48 kPa/s | 42 kPa/s |

Tabelle 5, Beispiel 4 (V) zeigt eine höhere Viskosität und einen stärkeren Viskositätsanstieg gegenüber der Erfindung (Beispiele 5 & 6). Die geringere Thixotropie-Fläche und Fließgrenze der Beispiele 5 und 6 weist einen leichteren Umgang der Organosilikat-Farben auf.

## Patentansprüche

1. Dispersion enthaltend
(A) mindestens eine Verbindung der Formel (I) 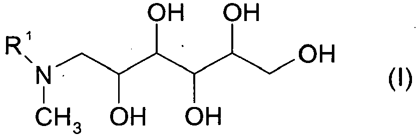 worin R¹ für C₁-C₄-Alkyl, CH₂CH₂OH oder CH₂CH(CH₃)OH steht,
(B) mindestens einem Silikatbindemittel,
und
(E) Wasser.

2. Dispersion nach Anspruch 1, die darüber hinaus als Komponente (C) ein oder mehrere polymere Bindemittel enthält.

3. Dispersion nach Anspruch 1 und/oder 2, die darüber hinaus als Komponente (D) einen oder mehrere der Bestandteile ausgewählt aus der Gruppe bestehend aus Pigment, Dispergiermittel, Entschäumer, Koaleszenzsmittel, Rheologie-Additiv, Biozid, Netzmittel und Alkali enthält.

4. Dispersion nach einem oder mehreren der Ansprüche 1 bis 3, wobei R¹ Methyl oder CH₂CH₂OH ist.

5. Dispersion nach einem oder mehreren der Ansprüche 1 bis 3, wobei R¹ Methyl ist.

6. Dispersion nach einem oder mehreren der Ansprüche 1 bis 5, bei der die Konzentration der Verbindung der Formel (I) 0,01 bis 10 Gew.-% beträgt.

7. Dispersion nach einem oder mehreren der Ansprüche 1 bis 5, bei der die Konzentration der Verbindung der Formel (I) 0,02 bis 5 % beträgt.

8. Dispersion nach einem oder mehreren der Ansprüche 1 bis 7, die eine quartäre Ammonium-Verbindung enthält.

9. Dispersion nach Anspruch 8, worin die quartäre Ammonium-Verbindung aus Verbindungen der Formeln (II a) und (II b) ausgewählt ist 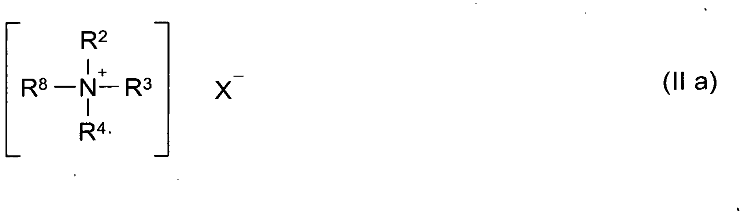 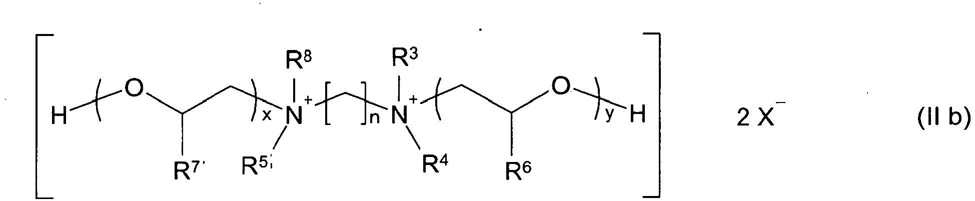 worin
R³, R⁴, R⁵ und R⁸ unabhängig voneinander für C₁-C₆-Alkyl;
R² für C₁-C₂-Alkyl, CH₂CH₂OH oder CH₂CH(CH₃)OH;
R⁶ und R⁷ unabhängig voneinander für H oder C₁-C₄-Alkyl;
n, x und y unabhängig voneinander für eine Zahl zwischen 1 und 10, und
X für ein Anion, ausgewählt aus der Gruppe bestehend aus Halogenide, Nitrite, Nitrate, Carbonate, Phosphate, Phosphonate, Hydroxyde, Sulfate oder Sulfonate
stehen.

10. Dispersion nach Anspruch 9, worin die Verbindungen der Formel (I) und (II) im Verhältnis 0,5:1 bis 1:0,5 eingesetzt werden.

11. Dispersion nach Anspruch 9, worin die Verbindungen der Formel (I) und (II) im Verhältnis 0,75:1 bis 1:0,75 eingesetzt werden.

12. Dispersion nach einem oder mehreren der Ansprüche 1 bis 11, enthaltend ein Weiß- oder Buntpigment in einer Menge von 10 bis 70 Gew.-%

13. Dispersion nach einem oder mehreren der Ansprüche 1 bis 12, enthaltend Netz- oder Dispergiermittel in einer Menge von 0,01 bis 10 Gew.-%

14. Dispersion nach einem oder mehreren der Ansprüche 1 bis 13, enthaltend Entschäumer in einer Menge von 0,01 bis 5 Gew.-%

15. Dispersion nach einem oder mehreren der Ansprüche 1 bis 14, enthaltend Biozide in einer Menge von 0,01 bis 5 Gew.-%

16. Dispersion nach einem oder mehreren der Ansprüche 1 bis 15, enthaltend Koaleszenzmittel in einer Menge von 0,01 bis 5 Gew.-%.

17. Dispersion nach einem oder mehreren der Ansprüche 1 bis 16, enthaltend Rheologie-Additive in einer Menge von 0,1 bis 10 Gew.-%.

18. Dispersion nach einem oder mehreren der Ansprüche 1 bis 17, enthaltend polymeres Bindemittel in einer Menge von 0,01 bis 70 Gew.-%.

19. Dispersion nach einem oder mehreren der Ansprüche 1 bis 17, enthaltend polymeres Bindemittel in einer Menge von 0,5 bis 50 Gew.-%.

20. Dispersion nach einem oder mehreren der Ansprüche 1 bis 19, enthaltend Alkali in einer Menge von 0,01 bis 10 Gew.-%.

21. Dispersion nach einem oder mehreren der Ansprüche 1 bis 20, worin 0,1 bis 40 Gew.-% des Bestandteils (B) enthalten sind.

22. Dispersion nach einem oder mehreren der Ansprüche 1 bis 20, worin 0,5 bis 25 Gew.-% des Bestandteils (B) enthalten sind.

23. Dispersion nach einem oder mehreren der Ansprüche 1 bis 22, worin 1 bis 80 Gew.-% Wasser enthalten sind.

24. Dispersion nach einem oder mehreren der Ansprüche 1 bis 23, worin die Verbindung der Formel (I) von Glucose abgeleitet ist.

25. Verwendung mindestens einer Verbindung der Formel (I) 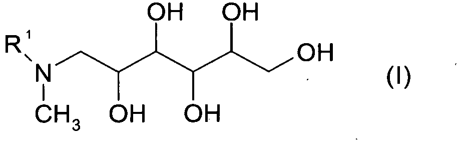 worin R¹ C₁-C₄-Alkyl, CH₂CH₂OH oder CH₂CH(CH₃)OH bedeuten, als Stabilisator für silikatische Beschichtungen, die mindestens ein Silikatbindemittel und Wasser enthalten.

26. Verwendung nach Anspruch 25, worin die Verbindung der Formel (I) mit mindestens einer quartären Ammonium-Verbindung kombiniert wird.

27. Verwendung nach Anspruch 26, worin die quartäre Ammonium-Verbindung der Formel (II a) und/oder (II b) entspricht 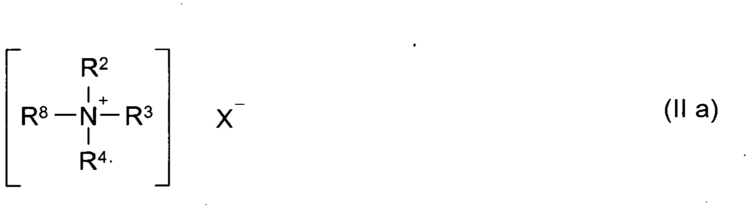 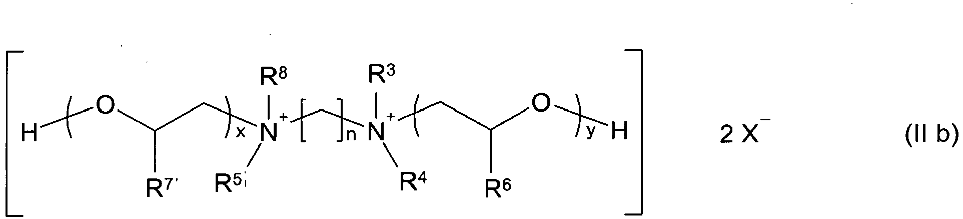 worin
R³, R⁴, R⁵ und R⁸ unabhängig voneinander für C₁-C₆-Alkyl;
R² für C₁-C₂-Alkyl, CH₂CH₂OH oder CH₂CH(CH₃)OH;
R⁶ und R⁷ unabhängig voneinander für H oder C₁-C₄-Alkyl;
n, x und y unabhängig voneinander für eine Zahl zwischen 1 und 10, und
X für ein Anion, ausgewählt aus der Gruppe bestehend aus Halogenide, Nitrite, Nitrate, Carbonate, Phosphate, Phosphonate, Hydroxyde, Sulfate oder Sulfonate
stehen.

28. Verwendung nach Anspruch 27, worin die Verbindungen der Formel (I) und (II) im Verhältnis 0,5:1 bis 1:0,5 eingesetzt werden.

29. Verwendung nach Anspruch 27, worin die Verbindungen der Formel (I) und (II) im Verhältnis 0,75:1 bis 1:0,75 eingesetzt werden.

30. Verwendung nach einem oder mehreren der Ansprüche 25 bis 29, worin die silikatischen Beschichtungen zusätzlich mindestens ein polymeres Bindemittel enthalten.

## Claims

1. Dispersion comprising
(A) at least one compound of the formula (I) 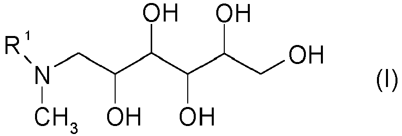 in which R¹ is C₁-C₄ alkyl, CH₂CH₂OH or CH₂CH(CH₃)OH,
(B) at least one silicate binder,
and
(E) water.

2. Dispersion according to Claim 1, further comprising as component (C) one or more polymeric binders.

3. Dispersion according to Claim 1 and/or 2, further comprising as component (D) one or more of the constituents selected from the group consisting of pigment, dispersant, defoamer, coalescent, rheological additive, biocide, wetting agent, and alkali.

4. Dispersion according to one or more of Claims 1 to 3, wherein R¹ is methyl or CH₂CH₂OH.

5. Dispersion according to one or more of Claims 1 to 3, wherein R¹ is methyl.

6. Dispersion according to one or more of Claims 1 to 5, wherein the concentration of the compound of the formula (I) is 0.01 to 10 wt%.

7. Dispersion according to one or more of Claims 1 to 5, wherein the concentration of the compound of the formula (I) is 0.02 to 5%.

8. Dispersion according to one or more of Claims 1 to 7, which comprises a quaternary ammonium compound.

9. Dispersion according to Claim 8, in which the quaternary ammonium compound is selected from compounds of the formulae (II a) and (II b) 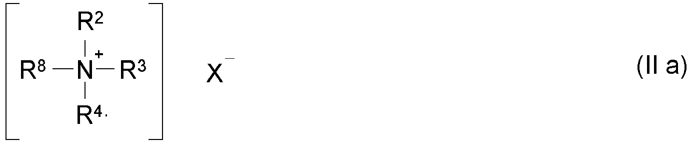 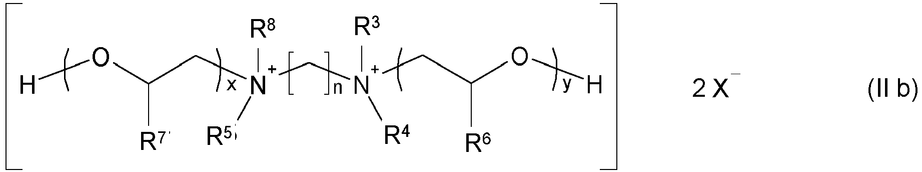 in which
R³, R⁴, R⁵, and R⁸ independently of one another are C₁-C₆ alkyl;
R² is C₁-C₂ alkyl, CH₂CH₂OH or CH₂CH(CH₃)OH;
R⁶ and R⁷ independently of one another are H or C₁-C₄ alkyl;
n, x and y independently of one another are a number between 1 and 10, and
X is an anion selected from the group consisting of halides, nitrites, nitrates, carbonates, phosphates, phosphonates, hydroxides, sulfates or sulfonates.

10. Dispersion according to Claim 9, in which the compounds of the formula (I) and (II) are used in a ratio of 0.5:1 to 1:0.5.

11. Dispersion according to Claim 9, in which the compounds of the formula (I) and (II) are used in a ratio of 0.75:1 to 1:0.75.

12. Dispersion according to one or more of Claims 1 to 11, comprising a white or chromatic pigment in an amount from 10 to 70 wt%.

13. Dispersion according to one or more of Claims 1 to 12, comprising wetting agents or dispersants in an amount from 0.01 to 10 wt%.

14. Dispersion according to one or more of Claims 1 to 13, comprising defoamers in an amount from 0.01 to 5 wt%.

15. Dispersion according to one or more of Claims 1 to 14, comprising biocides in an amount from 0.01 to 5 wt%.

16. Dispersion according to one or more of Claims 1 to 15, comprising coalescents in an amount from 0.01 to 5 wt%.

17. Dispersion according to one or more of Claims 1 to 16, comprising rheological additives in an amount from 0.1 to 10 wt%.

18. Dispersion according to one or more of Claims 1 to 17, comprising polymeric binder in an amount from 0.01 to 70 wt%.

19. Dispersion according to one or more of Claims 1 to 17, comprising polymeric binder in an amount from 0.5 to 50 wt%.

20. Dispersion according to one or more of Claims 1 to 19, comprising alkali in an amount from 0.01 to 10 wt%.

21. Dispersion according to one or more of Claims 1 to 20, including 0.1 to 40 wt% of constituent (B).

22. Dispersion according to one or more of Claims 1 to 20, including 0.5 to 25 wt% of constituent (B).

23. Dispersion according to one or more of Claims 1 to 22, including 1 to 80 wt% of water.

24. Dispersion according to one or more of Claims 1 to 23, in which the compound of formula (I) derives from glucose.

25. Use of at least one compound of the formula (I) 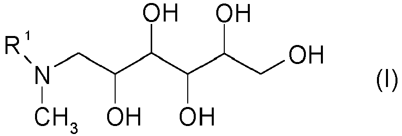 in which R¹ is C₁-C₄ alkyl, CH₂CH₂OH or CH₂CH(CH₃)OH as a stabilizer for silicatic coatings which comprise at least one silicate binder and water.

26. Use according to Claim 25, in which the compound of the formula (I) is combined with at least one quaternary ammonium compound.

27. Use according to Claim 26, in which the quaternary ammonium compound corresponds to the formula (II a) and/or (II b) 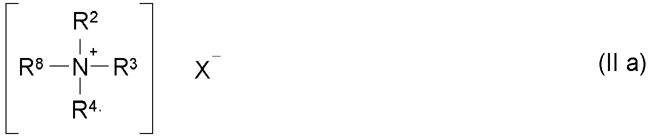 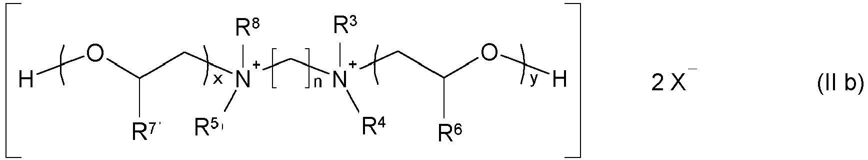 in which
R³, R⁴, R⁵, and R⁸ independently of one another are C₁-C₆ alkyl;
R² is C₁-C₂ alkyl, CH₂CH₂OH or CH₂CH(CH₃)OH;
R⁶ and R⁷ independently of one another are H or C₁-C₄ alkyl;
n, x and y independently of one another are a number between 1 and 10, and
X is an anion selected from the group consisting of halides, nitrites, nitrates, carbonates, phosphates, phosphonates, hydroxides, sulfates or sulfonates.

28. Use according to Claim 27, in which the compounds of the formula (I) and (II) are used in a ratio of 0.5:1 to 1:0.5.

29. Use according to Claim 27, in which the compounds of the formula (I) and (II) are used in a ratio of 0.75:1 to 1:0.75.

30. Use according to one or more of Claims 25 to 29, in which the silicatic coatings further comprise at least one polymeric binder.

## Revendications

1. Dispersion contenant
(A) au moins un composé de formule (I) 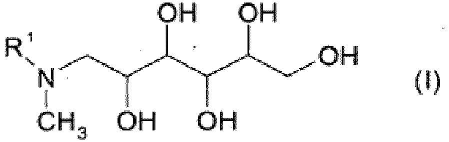 dans laquelle R¹ représente C₁₋₄-alkyle, CH₂CH₂OH ou CH₂CH(CH₃)OH.
(B) au moins un liant de type silicate, et
(E) de l'eau.

2. Dispersion selon la revendication 1, qui contient en outre un ou plusieurs liants polymères en tant que composant (C).

3. Dispersion selon la revendication 1 et/ou 2, qui contient en outre, en tant que composant (D), un ou plusieurs ingrédients choisis dans le groupe constitué par un pigment, un dispersant, un antimousse, un agent de coalescence, un additif de rhéologie, un biocide, un agent mouillant et un alcali.

4. Dispersion selon l'une ou plusieurs des revendications 1 à 3, R¹ étant méthyle ou CH₂CH₂OH.

5. Dispersion selon l'une ou plusieurs des revendications 1 à 3, R¹ étant méthyle.

6. Dispersion selon l'une ou plusieurs des revendications 1 à 5, dans laquelle la concentration en composé de formule (I) est de 0,01 à 10 % en poids.

7. Dispersion selon l'une ou plusieurs des revendications 1 à 5, dans laquelle la concentration en composé de formule (I) est de 0,02 à 5 % en poids.

8. Dispersion selon l'une ou plusieurs des revendications 1 à 7, qui contient un composé de type ammonium quaternaire.

9. Dispersion selon la revendication 8, le composé de type ammonium quaternaire étant choisi parmi des composés des formules (II a) et (II b) 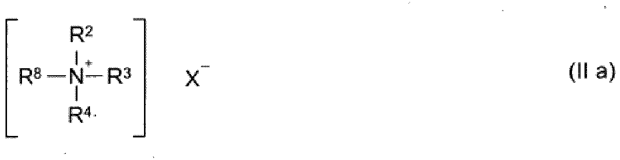 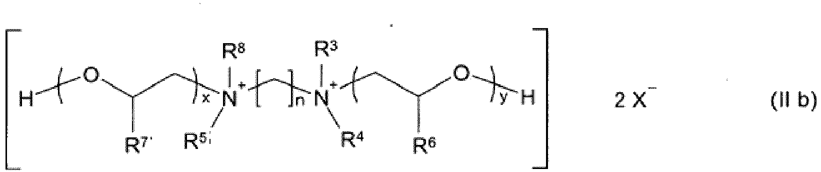 dans lesquelles
R³, R⁴, R⁵ et R⁸ représentent indépendamment les uns des autres C₁₋₆-alkyle ;
R² représente C₁₋₂-alkyle, CH₂CH₂OH ou CH₂CH(CH₃)OH ;
R⁶ et R⁷ représentent indépendamment l'un de l'autre H ou C₁₋₄-alkyle ;
n, x et y représentent indépendamment les uns des autres un nombre compris entre 1 et 10, et
X représente un anion, choisi dans le groupe constitué par les halogénures, les nitrites, les nitrates, les carbonates, les phosphates, les phosphonates, les hydroxydes, les sulfates et les sulfonates.

10. Dispersion selon la revendication 9, les composés de formule (I) et (II) étant utilisés en un rapport de 0,5:1 à 1:0,5.

11. Dispersion selon la revendication 9, les composés de formule (I) et (II) étant utilisés en un rapport de 0,75:1 à 1:0,75.

12. Dispersion selon l'une ou plusieurs des revendications 1 à 11, contenant un pigment blanc ou un pigment coloré en une quantité de 10 à 70 % en poids.

13. Dispersion selon l'une ou plusieurs des revendications 1 à 12, contenant des agents mouillants ou des dispersants en une quantité de 0,01 à 10 % en poids.

14. Dispersion selon l'une ou plusieurs des revendications 1 à 13, contenant des antimousses en une quantité de 0,01 à 5 % en poids.

15. Dispersion selon l'une ou plusieurs des revendications 1 à 14, contenant des biocides en une quantité de 0,01 à 5 % en poids.

16. Dispersion selon l'une ou plusieurs des revendications 1 à 15, contenant des agents de coalescence en une quantité de 0,01 à 5 % en poids.

17. Dispersion selon l'une ou plusieurs des revendications 1 à 16, contenant des additifs de rhéologie en une quantité de 0,1 à 10 % en poids.

18. Dispersion selon l'une ou plusieurs des revendications 1 à 17, contenant un liant polymère en une quantité de 0,01 à 70 % en poids.

19. Dispersion selon l'une ou plusieurs des revendications 1 à 17, contenant un liant polymère en une quantité de 0,5 à 50 % en poids.

20. Dispersion selon l'une ou plusieurs des revendications 1 à 19, contenant un alcali en une quantité de 0,01 à 10 % en poids.

21. Dispersion selon l'une ou plusieurs des revendications 1 à 20, dans laquelle 0,1 à 40 % en poids de l'ingrédient (B) sont contenus.

22. Dispersion selon l'une ou plusieurs des revendications 1 à 20, dans laquelle 0,5 à 25 % en poids de l'ingrédient (B) sont contenus.

23. Dispersion selon l'une ou plusieurs des revendications 1 à 22, dans laquelle 1 à 80 % d'eau sont contenus.

24. Dispersion selon l'une ou plusieurs des revendications 1 à 23, dans laquelle le composé de formule (I) est dérivé du glucose.

25. Utilisation d'au moins un composé de formule (I) 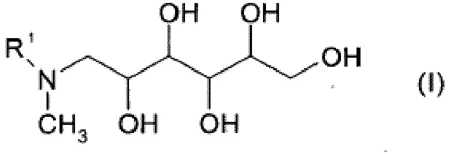 dans laquelle R¹ signifie C₁₋₄-alkyle, CH₂CH₂OH ou CH₂CH(CH₃)OH, en tant que stabilisateur pour des revêtements à base de silicate, qui contiennent au moins un liant de type silicate et de l'eau.

26. Utilisation selon la revendication 25, dans laquelle le composé de formule (I) est combiné avec au moins un composé de type ammonium quaternaire.

27. Utilisation selon la revendication 26, le composé de type ammonium quaternaire correspondant à la formule (II a) et/ou (II b) 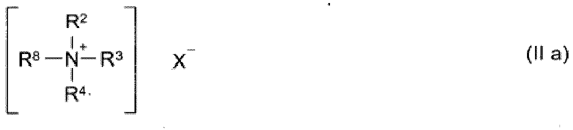 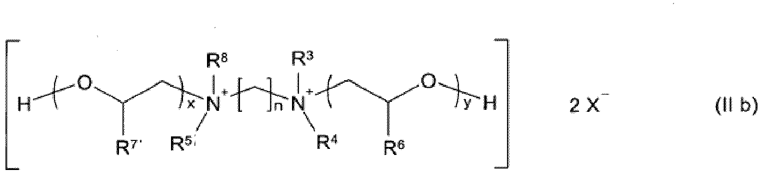 dans lesquelles
R³, R⁴, R⁵ et R⁸ représentent indépendamment les uns des autres C₁₋₆-alkyle ;
R² représente C₁₋₂-alkyle, CH₂CH₂OH ou CH₂CH(CH₃)OH ;
R⁶ et R⁷ représentent indépendamment l'un de l'autre H ou C₁₋₄-alkyle ;
n, x et y représentent indépendamment les uns des autres un nombre compris entre 1 et 10, et
X représente un anion, choisi dans le groupe constitué par les halogénures, les nitrites, les nitrates, les carbonates, les phosphates, les phosphonates, les hydroxydes, les sulfates et les sulfonates.

28. Utilisation selon la revendication 27, dans laquelle les composés de formule (I) et (II) sont utilisés en un rapport de 0,5:1 à 1:0,5.

29. Utilisation selon la revendication 27, dans laquelle les composés de formule (I) et (II) sont utilisés en un rapport de 0,75:1 à 1:0,75.

30. Utilisation selon l'une ou plusieurs des revendications 25 à 29, dans laquelle les revêtements à base de silicate contiennent de plus au moins un liant polymère.
